# EUROPEAN PATENT APPLICATION

(11) **EP 3 958 120 A1**
(43) Date of publication of application: **23.02.2022**
(21) Application number: 20792131.3
(22) Date of filing: 15.04.2020
(51) Int. Cl.: G06F 9/48

(54) **METHOD AND DEVICE FOR ANONYMOUS PAGE MANAGEMENT, TERMINAL DEVICE, AND READABLE STORAGE MEDIUM**

(30) Priority: 15.04.2019 CN 201910300812
(71) Applicant: Oneplus Technology (Shenzhen) Co., Ltd., Shenzhen, Guangdong 518000 (CN)
(72) Inventor: LIN, KengYu, Shenzhen, Guangdong 518042 (CN)
(74) Representative: Ipside
(86) International application number: PCT/CN2020/084989
(87) International publication number: WO 2020/211791

(57) **Abstract**

A method and device for anonymous page management, a terminal device, and a storage medium. The method comprises: monitoring in real-time whether a process having undergone a change in the priority thereof is present in a terminal device (S210); determining, on the basis of a monitored change in the priority of each process, a target process to be executed (S220); detecting whether a target anonymous page corresponding to said process is stored in an exchange space, where the exchange space is used for recycling anonymous pages (S230); and, if the target anonymous page is detected to be stored in the exchange space, then prereading the target anonymous page from the exchange space, thus directly using the target anonymous page when said process is being executed (S240).

## Description

The present application is proposed based on and claims priority of China Patent Application No. 201910300812.0 filed on April 15, 2019, in the China National Intellectual Property Administration, the entire contents of which are hereby incorporated by reference.

### TECHNICAL FIELD

The present disclosure relates to the field of process execution management technologies but is not limited to the field of process execution management technologies, and in particular to a method and a device for anonymous page management, a terminal device, and a readable storage medium.

### BACKGROUND

With the continuous development of science and technology, a variety of applications have been developed. A terminal device (for example, a smart phone) is faced with limited memory space while running multiple applications to provide appropriate services to a user. For this reason, the terminal device usually recycles an anonymous page, corresponding to an application process, that is not frequently used from a memory space to a swap space according to a least recently used (LRU) mechanism and a Kswapd process, thereby releasing the memory space corresponding to the anonymous page to the terminal device.

When executing a process that has an anonymous page that has been recycled into the swap space, the terminal device usually needs to block the process, immediately extract the anonymous page corresponding to the process from the swap space, and then rewrite the anonymous page into the memory space by constructing a page fault, thereby formally executing the process based on the anonymous page written into the memory space. During the above operations, the time consumed by the page extraction process is much greater than the time consumed by the page fault construction process. These two processes occurring in succession can easily cause random stalls to the process and affect the execution efficiency of the process.

### SUMMARY OF THE DISCLOSURE

The present disclosure provides a method and device for anonymous page management, a terminal device, and a storage medium.

The present disclosure provides a method for anonymous page management, applied to a terminal device and comprising:
monitoring whether a process of which a priority changes exists in the terminal device;
determining a target to-be-executed process according to a monitored priority change of each process;
detecting whether a target anonymous page corresponding to the target to-be-executed process is stored in a swap space, wherein the swap space is configured to recycle anonymous pages; and
prefetching the target anonymous page from the swap space in response to detecting that the target anonymous page is stored in the swap space, for directly using the target anonymous page when the target to-be-executed process is executed.

The present disclosure further provides a method for anonymous page management, applied to a terminal device and comprising:
monitoring whether a process of which a priority changes exists in the terminal device;
determining a target to-be-recycled process according to the monitored priority change of each process;
detecting whether target anonymous pages corresponding to the target to-be-recycled process are stored in the memory space; and
recycling at least one of the target anonymous pages corresponding to the target to-be-recycled process into the swap space in response to detecting that the target anonymous page is stored in the memory space; wherein the swap space is configured to recycle anonymous pages. The method for anonymous page management can recycle anonymous pages according to the priority change of each process, instead of directly recycling infrequently used anonymous pages as in the prior art, so as to avoid the phenomenon of directly recycling the anonymous pages that are infrequently used corresponding to the processes that need to be executed immediately or are being executed as in the prior art, and thus flexibly recycle each anonymous page, thereby reducing the memory pressure on the terminal device.

The present disclosure further provides a device for anonymous page management, applied to a terminal device and comprising:
a process monitoring module, configured to monitor whether a process of which a priority changes exists in the terminal device;
a process determining module, configured to determine a target to-be-executed process according to a monitored priority change of each process;
a page detection module, configured to detect whether a target anonymous page corresponding to the target to-be-executed process is stored in a swap space; wherein the swap space is configured to recycle anonymous pages; and
a page prefetching module, configured to pre-read the target anonymous page from the swap space in response to detecting that the target anonymous page is stored in the memory space, for directly using the target anonymous page when the target to-be-executed process is executed.

The present disclosure further provides a device for anonymous page management, applied to a terminal device and comprising:
a process monitoring module, configured to monitor whether a process of which a priority changes exists in the terminal device;
a process determining module, configured to determine a target to-be-recycled process according to the monitored priority change of each process;
a page detection module, configured to detect whether target anonymous pages corresponding to the target to-be-recycled process are stored in a memory space; and
a page recycling module, configured to recycle at least one of the target anonymous pages corresponding to the target to-be-recycled process into a swap space in response to detecting that the target anonymous pages is stored in the memory space; wherein the swap space is configured to recycle anonymous pages.

The present disclosure further provides a terminal device, comprising a processor and a non-volatile memory storing a computer instruction, wherein the terminal device performs a method for anonymous page management as described above when the computer instruction is executed by the processor.

The present disclosure further provides a readable storage medium, comprising a computer program, a terminal device at which the readable storage medium is located is controlled to perform a method for anonymous page management as described above when the computer program is executed.

By virtue of the method and device for anonymous page management, terminal device, and storage medium, the method for anonymous page management reduces the probability of random stalls in a to-be-executed process when executing the to-be-executed process with the anonymous page stored in the swap space, and ensures the execution performance of the to-be-executed process. The method includes: monitoring whether a process of which a priority changes exists in the terminal device; determining a target to-be-executed process according to a monitored priority change of each process; detecting whether a target anonymous page corresponding to the target to-be-executed process is stored in a swap space; and prefetching the target anonymous page from the swap space in response to detecting that the target anonymous page is stored in the swap space, for directly using the target anonymous page when the target to-be-executed process is executed. In this way, the probability of random stalls of the to-be-executed process may be reduced and the execution performance of the to-be-executed process may be ensured.

To make the above objects, features and advantages of the present disclosure more obvious and understandable, the following is a detailed description of the preferred embodiments of the present disclosure, together with the accompanying drawings, as follows.

### BRIEF DESCRIPTION OF THE DRAWINGS

To describe the technical solutions of the embodiments of the present disclosure more clearly, the following will briefly introduce the drawings required in the embodiments. It should be understood that the following drawings only show certain embodiments of the present disclosure, and therefore should not be regarded as a limitation of the scope of the claims of the present disclosure. For those skilled in the art, other relevant drawings can be obtained from these drawings without creative work.
FIG. 1 is a schematic block view of a terminal device according to an embodiment of the present disclosure.
FIG. 2 is a flowchart of a method for anonymous page management according to an embodiment of the present disclosure.
FIG. 3 is a flowchart of sub-operations included in S220 shown in FIG. 2.
FIG. 4 is a flowchart of a method for anonymous page management according to another embodiment of the present disclosure.
FIG. 5 is a flowchart of sub-operations included in S250 shown in FIG. 4.
FIG. 6 is a flowchart of a method for anonymous page management according to further another embodiment of the present disclosure.
FIG. 7 is a schematic block view of a device for anonymous page management according to an embodiment of the present disclosure.
FIG. 8 is a schematic block view of a device for anonymous page management according to another embodiment of the present disclosure.
FIG. 9 is a schematic block view of a device for anonymous page management according to further another embodiment of the present disclosure.

Elements indicated by reference numerals: 10-terminal device; 11-memory; 12-processor; 13-communication unit; 100-device for anonymous page management; 110-process monitoring module; 120-process determining module; 130-page detection module; 140-page prefetching module; 150-page recycling module.

### DETAILED DESCRIPTION

To make the objectives, technical solutions and advantages of the embodiments of the present disclosure clearer, the following will clearly and completely describe the technical solutions in the embodiments of the present disclosure with reference to the accompanying drawings in the embodiments of the present disclosure. Obviously, the described embodiments are a part of the embodiments of the present disclosure, but not all of the embodiments. The components of the embodiments of the present disclosure generally described and illustrated in the drawings herein may be arranged and designed in various different configurations.

Therefore, the following detailed description of the embodiments of the present disclosure provided in the accompanying drawings is not intended to limit the claimed scope of the present disclosure, but merely represents selected embodiments of the present disclosure. Based on the embodiments in the present disclosure, all other embodiments obtained by those skilled in the art without creative work fall within the scope of the present disclosure.

It should be noted that similar reference numerals and letters indicate similar items in the following drawings. Therefore, once an item is defined in one drawing, it is not required to be further defined or explained in the subsequent drawings. Hereinafter, some embodiments of the present disclosure will be described in detail with reference to the accompanying drawings. In cases of no conflict, the following embodiments and features in the embodiments can be combined with each other.

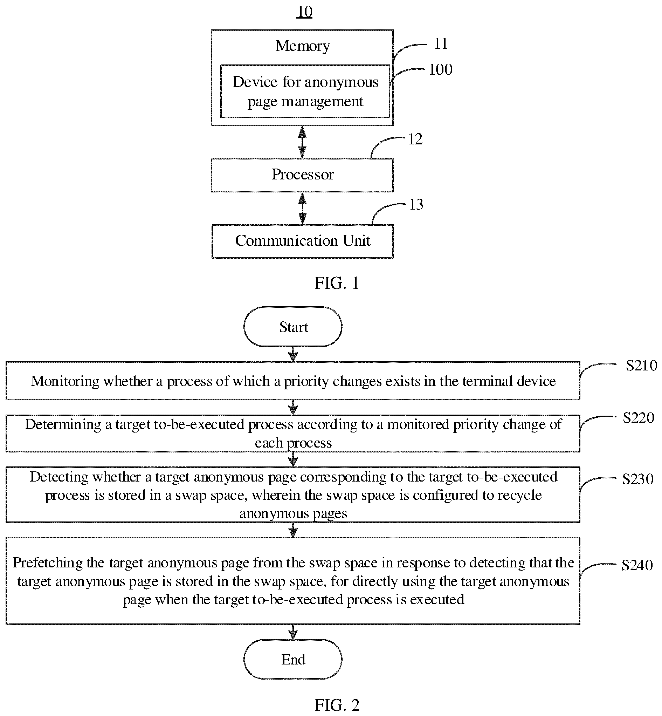

Referring to FIG. 1, FIG. 1 is a schematic block view of a terminal device according to an embodiment of the present disclosure. In the embodiment of the present disclosure, the terminal device 10 may be configured to execute processes corresponding to different applications to realize functions corresponding to the applications. The number of processes corresponding to each application is at least one. The application may be, but is not limited to, a video program, an audio program, a browser program, etc. The terminal device 10 may be, but is not limited to, a smart phone, a personal computer (PC), a tablet computer, a personal digital assistant (PDA), a mobile Internet device (MID), etc. In an implementation of the embodiment, the terminal device 10 is a smart phone.

In the embodiment, the terminal device 10 includes a device 100 for anonymous page management, a memory 11, a processor 12, and a communication unit 13. The device 100 for anonymous page management, the memory 11, the processor 12, and the communication unit 13 are directly or indirectly electrically connected to each other to realize data transmission or interaction. For example, the memory 11, the processor 12, and the communication unit 13 may be electrically connected to each other through one or more communication buses or signal lines.

In the embodiment, the memory 11 is a non-volatile memory, and the memory 11 may be configured to store processes included in the applications. Each process under a same application corresponds to multiple anonymous pages. A same page may be occupied by multiple processes in a switched manner. The memory 11 may be divided into multiple storage spaces. The storage 11 takes one of multiple storage spaces as a memory space of the terminal device 10, and takes one of the multiple storage spaces as a swap space of the terminal device 10. When the terminal device 10 is required to execute a certain process, all anonymous pages corresponding to the process are required to be written into the memory space, such that the terminal device 10 executes a program code corresponding to the process based on all the anonymous pages corresponding to the process. When the terminal device 10 is not required to execute a certain process, the terminal device 10 may recycle a part or all of the anonymous pages corresponding to the process into the swap space to release storage resources corresponding to the recycled part or all of the anonymous pages in the memory space, thereby ensuring that the memory space can provide sufficient storage resources for other processes. In an implementation of the embodiment of the present disclosure, the terminal device 10 may apply the LRU mechanism and the Kswapd process as in the prior art to recycle an anonymous page, corresponding to an application process, that is not frequently used from the memory space to the swap space. While the page recycling method in the prior art is only based on a use frequency of each anonymous page, it may occur that an infrequently used anonymous page corresponding to a current process that is required to be executed immediately or is being executed is recycled, which affects the execution efficiency of each process.

In the embodiment, the memory 11 is also configured to store a priority of each process at the terminal device 10 to indicate the priority of a corresponding to-be-executed process at the terminal device 10. The priority of a same process may change with user operations at different times. When the priority of a certain process reaches a certain threshold, the terminal device 10 will correspondingly execute the process. A process with a higher priority is more likely to be executed by the terminal device 10. In an implementation of the embodiment, the operating system of the terminal device 10 is the Android system, and the terminal device 10 may use the Android system's definition of priority (adj) (the priority corresponding to adj0 is the highest, and the priority corresponding to adj 1000 is the lowest) to represent the current priority of each process.

In the embodiment, the memory 11 is also configured to store a first preset priority and a second preset priority. The second preset priority is not higher than the first preset priority. The first preset priority and the second preset priority are configured to classify the current priority of each process numerically. When the first preset priority and the second preset priority are represented by corresponding adj values in the terminal device 10 whose operating system is the Android system, the adj value representing the first preset priority is less than or equal to the adj value representing the second preset priority, thereby ensuring that the second preset priority is not higher than the first preset priority. In the embodiment, the memory 11 is also configured to store computer instructions or computer programs. The processor 12 can execute the computer instructions or the computer programs accordingly after receiving execution instructions.

In the embodiment, the processor 12 may be an integrated circuit chip with signal processing capability. The processor 12 may be a general-purpose processor, including a central processing unit (CPU), a graphics processing unit (GPU), a network processor (NP), etc. The general-purpose processor may be a microprocessor or the processor may also be any conventional processor, etc., and may implement or execute the methods, steps, and logical block diagrams disclosed in the embodiments of the present disclosure.

In the embodiment, the communication unit 13 is configured to establish a communication connection between the terminal device 10 and other external devices through a network, and to send and receive data through the network. For example, the terminal device 10 downloads a corresponding application from an application server through the communication unit 13.

In the embodiment, the device 100 for anonymous page management includes at least one software function module that may be stored in the memory 11 in the form of software or firmware or solidified in the operating system of the terminal device 10. The processor 12 may be configured to execute an executable module stored in the memory 11, such as the software function module, computer programs, etc. included in the device 100 for anonymous page management.

It can be understood that the block view shown in FIG. 1 is only a schematic structural composition view of the terminal device 10, and the terminal device 10 may also include more or less components than those shown in FIG. 1, or may have a different configuration compared with the configuration shown in FIG. 1. The components shown in FIG. 1 may be implemented by hardware, software or a combination thereof.

An embodiment of the present disclosure provides a method, including:
monitoring whether a process of which a priority changes exists in the terminal device;
determining a target to-be-executed process according to a monitored priority change of each process;
according to whether the target to-be-executed process involves an anonymous page, determining a current storage space of the anonymous page; and
storing the anonymous page in the current storage space.

The current storage space here includes: swap space or cache space. For example, when the target to-be-executed process does not involve an anonymous page, the current storage space of the anonymous page is determined as cache space; and/or, for example, when the target to-be-executed process involves an anonymous page, the current storage space of the anonymous page is determined as swap space.

In this way, when the target to-be-executed process does not involve an anonymous page and the anonymous page is stored in the cache space, the anonymous page is dumped to the swap space, thereby freeing the cache space. When the target to-be-executed process involves an anonymous page and the anonymous page is stored in the swap space, the anonymous page is dumped to the cache space, thereby accelerating the execution efficiency of the target to-be-executed process.

Referring to FIG. 2, FIG. 2 is a flowchart of a method for anonymous page management according to an embodiment of the present disclosure. In the embodiment of the present disclosure, the method for anonymous page management shown in FIG. 2 is applied to the terminal device 10, and is configured to prefetch an anonymous page of a to-be-executed process, the anonymous page of the to-be-executed process being stored in the swap space. In this way, when the to-be-executed process is executed, the prefetched anonymous page may be directly used, thereby reducing the probability of random stalls in the to-be-executed process, and ensuring the execution efficiency of the to-be-executed process. The specific process and steps of the method for anonymous page management shown in FIG. 2 are described in detail below.

At block S210: monitoring whether a process of which a priority changes exists in the terminal device.

In the embodiment, the terminal device 10 may perform priority monitoring on the processes corresponding to each application in real time to monitor whether the current priority of each process has changed. The monitoring whether a process of which the priority changes exists in the terminal device may also include: periodically monitoring whether a process of which the priority changes exists in the terminal device.

At block S220: determining a target to-be-executed process according to a monitored priority change of each process.

In the embodiment, after the terminal device 10 obtains the current priority change of each process, the terminal device 10 may determine the target to-be-executed process from all the processes currently stored in the terminal device 10. The to-be-executed process is a process that may be currently required to be executed by the terminal device 10, and the priority change of the to-be-executed process is that the priority becomes higher.

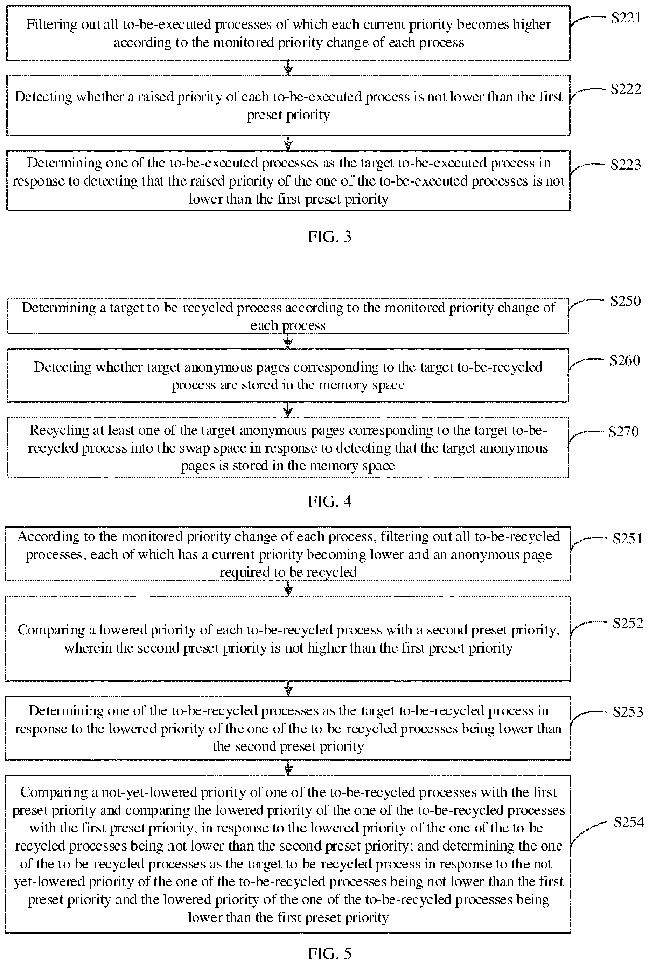

Referring to FIG. 3, FIG. 3 is a flowchart of sub-operations included in S220 shown in FIG. 2. In the embodiment of the present disclosure, the step S220 determines the target to-be-executed process based on the first preset priority, and the step S220 includes sub-step S221, sub-step S222, and sub-step S223.

At block S221: filtering out all to-be-executed processes of which each current priority becomes higher according to the monitored priority change of each process.

In the embodiment, after detecting the priority change of each process, the terminal device 10 may filter out all the to-be-executed processes, each of which has current priority becoming higher. When the current priority of a certain to-be-executed process becomes higher, it indicates that the probability that the to-be-executed process is currently executed by the terminal device 10 has increased.

At block S222: detecting whether a raised priority of each to-be-executed process is not lower than the first preset priority.

In the embodiment, for each filtered to-be-executed process, the terminal device 10 may detect whether the priority of the to-be-executed process after becoming higher is not lower than the first preset priority to determine whether the to-be-executed process is currently required to perform anonymous page prefetching. When the adj value representing the first preset priority in the terminal device 10 of which the operating system is the Android system is less than or equal to the adj value representing the current priority of a certain to-be-executed process, it is indicated that the current priority of the to-be-executed process is not lower than the first preset priority.

At block S223: determining one of the to-be-executed processes as the target to-be-executed process in response to detecting that the raised priority of the one of the to-be-executed processes is not lower than the first preset priority.

In the embodiment, when the terminal device 10 detects that the raised priority of a certain to-be-executed process is not lower than the first preset priority, the terminal device 10 may select the to-be-executed process as the target to be executed process. The target to-be-executed process may be a to-be-executed process of which priority before becoming higher is lower than the first preset priority and the priority after becoming higher is not lower than the first preset priority. The target to-be-executed process may also be a to-be-executed process of which priorities before and after becoming higher are both not lower than the first preset priority.

In another embodiment of the present disclosure, the step S220 does not need to determine the target to-be-executed process based on the first preset priority. The terminal device 10 may filter out all the to-be-executed processes of which each current priority becomes higher based on the monitored priority change of each process, and directly take the filtered to-be-executed processes as the corresponding target to-be-executed processes. In this case, the priority of the target to-be-executed processes before and after the change has no association relationship with the first preset priority.

At block S230: detecting whether a target anonymous page corresponding to the target to-be-executed process is stored in a swap space, wherein the swap space is configured to recycle anonymous pages.

In the embodiment, the swap space is configured to recycle anonymous pages. After the terminal device 10 determines a target to-be-executed process, the terminal device 10 may detect whether the target anonymous page corresponding to the target to-be-executed process (a part of or all the anonymous pages of the target to-be-executed process) is stored in the swap space.

At block S240: prefetching the target anonymous page from the swap space in response to detecting that the target anonymous page is stored in the swap space, for directly using the target anonymous page when the target to-be-executed process is executed.

In the embodiment, when the terminal device 10 detects that the target anonymous page corresponding to the target to-be-executed process is stored in the swap space, the terminal device 10 may prefetch the target anonymous page corresponding to the target to-be-executed process from the swap space, such that when the target to-be-executed process is being executed, the terminal device 10, while blocking the target to-be-executed process, does not need to immediately extract the anonymous page of the target to-be-executed process that is recycled into the swap space, as in the prior art. The prefetched target anonymous pages may be written into the memory space directly based on the page fault mechanism to directly use the target anonymous page to execute the target to-be-executed process, thereby reducing the probability of random stalls when the target to-be-executed process is executed, and ensuring the execution efficiency of the to-be-executed process.

The method for anonymous page management shown in FIG. 2 may adopt the LRU mechanism and the Kswapd process as in the prior art to recycle the rarely used anonymous pages corresponding to the application process from the memory space to the swap space, so as to realize page recycling.

Referring to FIG. 4, FIG. 4 is a flowchart of a method for anonymous page management according to another embodiment of the present disclosure. In the embodiment of the present disclosure, compared with the method for anonymous page management shown in FIG. 2, the method for anonymous page management shown in FIG. 4 further includes step S250, step S260, and step S270. The method for anonymous page management may be executed by performing the step S250, step S260, and step S270, to recycle the anonymous page of a certain to-be-recycled process. The step S250, the step S260, and the step S270 enable the terminal device 10 to recycle anonymous pages according to the priority changes of each process, instead of directly recycling infrequently used pages as in the prior art, to avoid the phenomenon that the infrequently used anonymous pages corresponding to the processes that need to be executed immediately or are being executed are directly recycled as in the prior art, thereby ensuring that the method for anonymous page management shown in FIG. 4 can flexibly recycle each anonymous page, and reducing the memory pressure of the terminal device 10.

At block S250: determining a target to-be-recycled process according to the monitored priority change of each process.

In the embodiment, the to-be-recycled process is a process of which the anonymous page is required to be recycled, and the current priority change of the to-be-recycled process is that the priority becomes lower. After the terminal device 10 obtains the current priority change of each process, the terminal device 10 may filter out all the to-be-recycled processes (of which anonymous pages are required to be recycled), the priorities of which each becomes lower, from processes stored in the terminal device 10, and take the filtered to-be-recycled processes as the to-be-recycled processes.

In an embodiment, referring to FIG. 5, FIG. 5 is a flowchart of sub-operations included in S250 shown in FIG. 4. In an embodiment of the present disclosure, the step S250 needs to determine the target to-be-recycled process based on the second preset priority and the first preset priority. In this case, the step S250 includes sub-step S251, sub-step S252, sub-step S253, and sub-step S254. The second preset priority is not higher than the first preset priority.

At block S251: according to the monitored priority change of each process, filtering out all to-be-recycled processes, each of which has a current priority becoming lower and an anonymous page required to be recycled.

In the embodiment, after detecting the priority change of each process, the terminal device 10 may filter out all the stored to-be-recycled processes of which current priority becomes lower. When the current priority of a certain to-be-recycled process becomes lower, it indicates that the probability that the to-be-recycled process is currently executed by the terminal device 10 is reduced. The terminal device 10 may preferably recycle the anonymous page of the to-be-recycled process to reduce the memory pressure of the terminal device 10.

At block S252: comparing a lowered priority of each to-be-recycled process with a second preset priority.

In the embodiment, for each selected to-be-recycled process, the terminal device 10 compares the priority of the to-be-recycled process after becoming lower with the second preset priority to determine whether the anonymous page of the to-be-recycled process is required to be recycled according to a comparison result. When the adj value representing the second preset priority in the terminal device 10 of which the operating system is the Android system is greater than the adj value representing the current priority of a certain to-be-recycled process, it is indicated that the current priority of the to-be-recycled process is lower than the second preset priority.

At block S253: determining one of the to-be-recycled processes as the target to-be-recycled process in response to the lowered priority of the one of the to-be-recycled processes being lower than the second preset priority.

In the embodiment, when the terminal device 10 detects that the priority of a certain to-be-recycled process after becoming lower is lower than the second preset priority, the terminal device 10 may take the to-be-recycled process as the target to-be-recycled process. The target to-be-recycled process may be a to-be-recycled process of which priorities before and after becoming lower are both lower than the second preset priority. The target to-be-recycled process may also be a to-be-recycled process of which the priority before becoming lower is not lower than the second preset priority while the priority after becoming lower is lower than the second preset priority. The condition that the priority before becoming lower is not lower than the second preset priority includes that the priority before becoming lower is not lower than the first preset priority, and the priority before becoming lower is within a priority range between the second preset priority and the first preset priority.

At block S254: comparing a not-yet-lowered priority of one of the to-be-recycled processes with the first preset priority and comparing the lowered priority of the one of the to-be-recycled processes with the first preset priority, in response to the lowered priority of the one of the to-be-recycled processes being not lower than the second preset priority; and determining the one of the to-be-recycled processes as the target to-be-recycled process in response to the not-yet-lowered priority of the one of the to-be-recycled processes being not lower than the first preset priority and the lowered priority of the one of the to-be-recycled processes being lower than the first preset priority.

In the embodiment, when the terminal device 10 detects that the current priority after becoming lower of a certain to-be-recycled process is not lower than the second preset priority, the terminal device 10 may compare the priorities before and after becoming lower of the to-be-recycled process with the first preset priority respectively, thereby determining whether the anonymous page of the to-be-recycled process is currently required to be recycled according to a comparison result. In an embodiment, when the priority before becoming lower of the to-be-recycled process is not lower than the first preset priority, and the priority after becoming lower of the to-be-recycled process is lower than the first preset priority, it is indicated that the current priority of the to-be-recycled process is lowered from not lower than the first preset priority to lower than the first preset priority. In this case, when the priority after becoming lower of the to-be-recycled process is lower than the first preset priority and not lower than the second preset priority, the terminal device 10 may also take the to-be-recycled process as the target to-be-recycled process.

In another embodiment of the present disclosure, the step S250 does not need to determine the target to-be-recycled process based on the first preset priority and the second preset priority. In this case, after the terminal device 10 filters out all the to-be-recycled processes of which current priorities each becomes lower according to the monitored priority change of each process, the terminal device 10 may directly take the filtered to-be-recycled processes as the corresponding target to-be-recycled processes. In this case, the priorities before and after change of the to-be-recycled process has no relationship with the first preset priority and the second preset priority.

At block S260: detecting whether target anonymous pages corresponding to the target to-be-recycled process are stored in the memory space.

In the embodiment, after the terminal device 10 determines the target to-be-recycled process, the terminal device 10 may detect whether the target anonymous page corresponding to the target to-be-recycled process (a part of or all anonymous pages of the target to-be-recycled process) is stored in the memory space.

At block S270: recycling at least one of the target anonymous pages corresponding to the target to-be-recycled process into the swap space in response to detecting that the target anonymous pages is stored in the memory space.

In the embodiment, when the terminal device 10 detects that the target anonymous page(s) corresponding to a certain target to-be-recycled process is stored in the memory space, the terminal device 10 may recycle at least one of the target anonymous pages corresponding to the to-be-recycled process into the swap space from the memory space, thereby releasing the storage resources occupied by the target anonymous page in the memory space, thereby reducing the memory pressure of the terminal device 10.

In an embodiment, the recycling at least one of the target anonymous pages corresponding to the target to-be-recycled process into the swap space includes:

detecting whether each target anonymous page, currently stored in the memory space, of the target to-be-recycled process is occupied by the target to-be-executed process, and obtaining a detection result; and

according to the detection result, selecting at least one target anonymous page that is not occupied by the target to-be-executed process from all the target anonymous pages, currently stored in the memory space, of the target to-be-recycled process, and recycling the selected at least one target anonymous page into the swap space.

The target to-be-executed process is a to-be-executed process of which the current priority is not lower than the first preset priority and becomes higher. When all the target anonymous pages, currently stored in the memory space, of the target to-be-recycled process are not occupied by other target to-be-executed processes, the terminal device 10 recycles all the target anonymous pages into the swap space. When a part of the target anonymous pages, currently stored in the memory space, of the target to-be-recycled process is not occupied by other target to-be-executed processes, the terminal device 10 recycles the target anonymous pages that are not occupied by the other target to-be-executed processes into the swap space.

In an embodiment, the recycling at least one of the target anonymous pages from the memory space into the swap space includes:

directly recycling all the target anonymous pages, currently stored in the memory space, of the target to-be-recycled process into the swap space.

The terminal device 10 does not need to care about the anonymous page occupation relationship between the target to-be-recycled process and other processes (including other to-be-recycled processes and other to-be-recycled processes). When the target anonymous pages, stored in the memory space, corresponding to the target to-be-recycled process are detected, the terminal device 10 may directly recycle all the target anonymous pages, currently stored in the memory space, of the target to-be-recycled process into the swap space to release the storage resources occupied by the target anonymous pages in the memory space, thereby reducing the memory pressure of the terminal device 10.

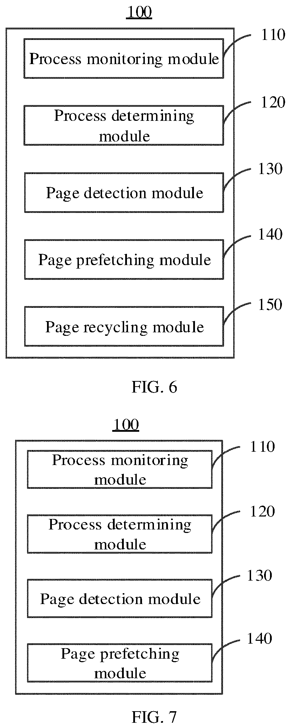

Referring to FIG. 6, FIG. 6 is a flowchart of a method for anonymous page management according to further another embodiment of the present disclosure. In the embodiment of the present disclosure, compared with the method for anonymous page management shown in FIG. 4, the method for anonymous page management shown in FIG. 6 does not include the related steps of the method for anonymous page management shown in FIG. 2 and only includes steps S310, S320, S330, and S340 of flexible recycling processing on each anonymous page in the terminal device 10. The method for anonymous page management shown in FIG. 6 enables the terminal device 10 to recycle anonymous pages according to the priority changes of each process, instead of directly recycling anonymous pages that are not frequently used as in the prior art, so as to avoid the phenomenon of directly recycling the rarely used anonymous pages corresponding to the processes that need to be executed immediately or being executed, thereby flexibly recycling each anonymous page and reducing the memory pressure of the terminal device 10. For the respective execution processes of step S310, step S320, step S330, and step S340, reference may be made to the detailed description of step S210, step S250, step S260, and step S270 above in turn.

At block S310: monitoring whether a process of which a priority changes exists in the terminal device (for example, but not limited to: monitoring whether a process with a priority changes exists in the terminal device 10 in real time).

At block S320: determining a target to-be-recycled process according to the monitored priority change of each process.

At block S330: detecting whether target anonymous pages corresponding to the target to-be-recycled process are stored in the memory space.

At block S340: recycling at least one of the target anonymous pages corresponding to the target to-be-recycled process into the swap space in response to detecting that the target anonymous page being stored in the memory space.

The step S320 may determine the target to-be-recycled process based on the second preset priority and the first preset priority, or not be based on the first preset priority and the second preset priority. The second preset priority is not higher than the first preset priority.

In an embodiment, when the step S320 needs to determine the target to-be-recycled process based on the second preset priority and the first preset priority, then the step S320 includes:
according to the monitored priority change of each process, filtering out all to-be-recycled processes, each of which has a current priority becoming lower and an anonymous page required to be recycled;
comparing a lowered priority of each to-be-recycled process with a second preset priority;
determining one of the to-be-recycled processes as the target to-be-recycled process in response to the lowered priority of the one of the to-be-recycled processes being lower than the second preset priority; and
comparing a not-yet-lowered priority of one of the to-be-recycled processes with the first preset priority and comparing the lowered priority of the one of the to-be-recycled processes with the first preset priority, in response to the lowered priority of the one of the to-be-recycled processes being not lower than the second preset priority; and determining the one of the to-be-recycled processes as the target to-be-recycled process in response to the not-yet-lowered priority of the one of the to-be-recycled processes being not lower than the first preset priority and the lowered priority of the one of the to-be-recycled processes being lower than the first preset priority.

For the execution process of the sub-steps included in the step S320, reference may be made to the detailed description of the sub-step S251, the sub-step S252, the sub-step S253, and the sub-step S254 in turn, which will not be repeated here.

In an embodiment, the step S320 does not need to determine the target to-be-recycled process based on the first preset priority and the second preset priority. In this case, after the terminal device 10 filters out all the to-be-recycled processes of which current priorities each becomes lower according to the monitored priority change of each process, the terminal device 10 may directly take the filtered to-be-recycled processes as the corresponding target to-be-recycled processes. In this case, the priorities before and after change of the to-be-recycled process has no relationship with the first preset priority and the second preset priority.

The step S340 may correspond to two implementation manners. One of the implementation manners needs to consider the impact of other to-be-executed processes (that is, the target to-be-executed processes), each of which has a current priority becoming higher and the raised priority is not lower than the first preset priority. The other implementation method does not need to consider the impact of the target to-be-executed process.

In an embodiment, the recycling at least one of the target anonymous pages corresponding to the target to-be-recycled process into the swap space includes:
detecting whether each target anonymous page, currently stored in the memory space, of the target to-be-recycled process is occupied by the target to-be-executed process, and obtaining a detection result; and
according to the detection result, selecting at least one target anonymous page that is not occupied by the target to-be-executed process from all target anonymous pages, currently stored in the memory space, of the target to-be-recycled process, and recycling the selected at least one target anonymous page into the swap space.

In an embodiment, the recycling at least one of the target anonymous pages from the memory space into the swap space includes:
directly recycling all the target anonymous pages, currently stored in the memory space, of the target to-be-recycled process into the swap space.

For the execution process of the two implementation manners corresponding to the step S340, reference may be made to the detailed description of the two implementation manners included in the step S270 in turn, which will not be repeated here.

Referring to FIG. 7, FIG. 7 is a schematic block view of a device for anonymous page management according to an embodiment of the present disclosure. In the embodiment of the present disclosure, the device 100 for anonymous page management shown in FIG. 7 can execute the method for anonymous page management shown in FIG. 2. The device 100 for anonymous page management includes a process monitoring module 110, a process determining module 120, a page detection module 130, and a page prefetching module 140.

The process monitoring module 110 is configured to monitor whether a process of which a priority changes exists in the terminal device 10.

In the embodiment, the process monitoring module 110 can perform step S210 in FIG. 2, and for specific description, reference may be made to the detailed description of step S210 above.

The process determining module 120 is configured to determine a target to-be-executed process according to a monitored priority change of each process.

In the embodiment, the process determining module 120 may be further configured to:
filter out all to-be-executed processes of which each current priority becomes higher according to the monitored priority change of each process;
detect whether a raised priority of each to-be-executed process is not lower than the first preset priority; and
determine one of the to-be-executed processes as the target to-be-executed process in response to detecting that the raised priority of the one of the to-be-executed processes is not lower than the first preset priority.

The process determining module 120 can perform step S220 in FIG. 2 and sub-step S221, sub-step S222, and sub-step S223 in FIG. 3. For the specific description, reference may be made to the above detailed description of step S220, sub-step S221, and sub-step of S222 and sub-step S223.

The page detection module 130 is configured to detect whether a target anonymous page corresponding to the target to-be-executed process is stored in a swap space, wherein the swap space is configured to recycle anonymous pages.

In the embodiment, the page detection module 130 can perform step S230 in FIG. 2, and for specific description, reference may be made to the detailed description of step S230 above.

The page prefetching module 140 is configured to prefetch the target anonymous page from the swap space in response to detecting that the target anonymous page is stored in the swap space, for directly using the target anonymous page when the target to-be-executed process is executed.

In the embodiment, the page prefetching module 140 may perform step S240 in FIG. 2, and for specific description, reference may be made to the detailed description of step S240 above.

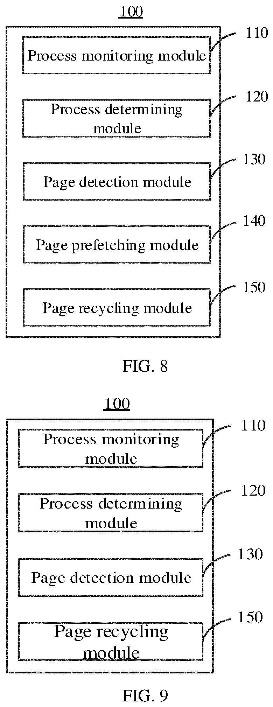

Referring to FIG. 8, FIG. 8 is a schematic block view of a device for anonymous page management according to another embodiment of the present disclosure. In the embodiment of the present disclosure, the device 100 for anonymous page management shown in FIG. 8 can execute the method for anonymous page managements shown in FIGS. 2 and 4. Compared with the device 100 for anonymous page management shown in FIG. 7, the device 100 for anonymous page management shown in FIG. 8 also includes a page recycling module 150.

The process determining module 120 is further configured to determine a target to-be-recycled process according to the monitored priority change of each process.

In the embodiment, the process determining module 120 is further configured to: according to the monitored priority change of each process, filter out all to-be-recycled processes, each of which has a current priority becoming lower and an anonymous page required to be recycled;
compare a lowered priority of each to-be-recycled process with a second preset priority, wherein the second preset priority is not higher than the first preset priority;
determine one of the to-be-recycled processes as the target to-be-recycled process in response to the lowered priority of the one of the to-be-recycled processes being lower than the second preset priority;
and compare a not-yet-lowered priority of one of the to-be-recycled processes with the first preset priority and compare the lowered priority of the one of the to-be-recycled processes with the first preset priority, in response to the lowered priority of the one of the to-be-recycled processes being not lower than the second preset priority; and determine the one of the to-be-recycled processes as the target to-be-recycled process in response to the not-yet-lowered priority of the one of the to-be-recycled processes being not lower than the first preset priority and the lowered priority of the one of the to-be-recycled processes being lower than the first preset priority.

The process determining module 120 may also perform step S250 in FIG. 4 and sub-step S251, sub-step S252, sub-step S253, and sub-step S254 in FIG. 5. For the specific description, reference may be made to the above description of step S250, sub-step S251, sub-step S252, sub-step S253 and sub-step S254.

The page detection module 130 is further configured to detect whether target anonymous pages corresponding to the target to-be-recycled process are stored in the memory space.

In the embodiment, the page detection module 130 may also perform step S260 in FIG. 4, and for specific description, reference may be made to the detailed description of step S260 above.

The page recycling module 150 is configured to recycle at least one of the target anonymous pages corresponding to the target to-be-recycled process into the swap space in response to detecting that the target anonymous pages is stored in the memory space.

In an implementation of the embodiment, the page recycling module 150 is configured to detect whether each target anonymous page, currently stored in the memory space, of the target to-be-recycled process is occupied by the target to-be-executed process, and obtain a detection result; and
according to the detection result, select at least one target anonymous page that is not occupied by the target to-be-executed process from all the target anonymous pages, currently stored in the memory space, of the target to-be-recycled process, and recycle the selected at least one target anonymous page into the swap space.

In another implementation manner of the embodiment, the page recycling module 150 is configured to:
directly recycle all the target anonymous pages, currently stored in the memory space, of the target to-be-recycled process into the swap space.

The page recycling module 150 may perform step S270 in FIG. 4, and for specific description, reference may be made to the detailed description of step S270 above.

Referring to FIG. 9, FIG. 9 is a schematic block view of a device for anonymous page management according to further another embodiment of the present disclosure. In the embodiment of the present disclosure, the device 100 for anonymous page management shown in FIG. 9 can execute the method for anonymous page management shown in FIG. 6. The device 100 for anonymous page management includes a process monitoring module 110, a process determining module 120, and a page detection module 130 and a page recycling module 150.

The process monitoring module 110 is configured to monitor whether a process of which a priority changes exists in the terminal device 10 in real time.

In the embodiment, the process monitoring module 110 may perform step S310 in FIG. 6, and for specific description, reference may be made to the detailed description of step S310 above.

The process determining module 120 is configured to determine a target to-be-recycled process according to the monitored priority change of each process.

In the embodiment, the process determining module 120 may perform step S320 in FIG. 6, and for specific description, reference may be made to the detailed description of step S320 above. In an implementation of the embodiment, in the determining the target to-be-recycled process according to the monitored priority change of each process, the process determining module 120 is further configured to:
according to the monitored priority change of each process, filter out all to-be-recycled processes, each of which has a current priority becoming lower and an anonymous page required to be recycled;
compare a lowered priority of each to-be-recycled process with a second preset priority;
determine one of the to-be-recycled processes as the target to-be-recycled process in response to the lowered priority of the one of the to-be-recycled processes being lower than the second preset priority; and
compare a not-yet-lowered priority of one of the to-be-recycled processes with the first preset priority and compare the lowered priority of the one of the to-be-recycled processes with the first preset priority, in response to the lowered priority of the one of the to-be-recycled processes being not lower than the second preset priority; and determine the one of the to-be-recycled processes as the target to-be-recycled process in response to the not-yet-lowered priority of the one of the to-be-recycled processes being not lower than the first preset priority and the lowered priority of the one of the to-be-recycled processes being lower than the first preset priority.

The page detection module 130 is configured to detect whether target anonymous pages corresponding to the target to-be-recycled process are stored in the memory space.

In the embodiment, the page detection module 130 may perform step S330 in FIG. 6, and for specific description, reference may be made to the detailed description of step S330 above.

The page recycling module 150 is configured to recycle at least one of the target anonymous pages corresponding to the target to-be-recycled process into the swap space in response to detecting that the target anonymous page being stored in the memory space.

In the embodiment, the page recycling module 150 may perform step S340 in FIG. 6, and for specific description, reference may be made to the detailed description of step S340 above.

In an embodiment, in the recycling at least one of the target anonymous pages corresponding to the target to-be-recycled process into the swap space, the page recycling module 150 is further configured to:
detect whether each target anonymous page, currently stored in the memory space, of the target to-be-recycled process is occupied by the target to-be-executed process, and obtain a detection result; and
according to the detection result, select at least one target anonymous page that is not occupied by the target to-be-executed process from all target anonymous pages, currently stored in the memory space, of the target to-be-recycled process, and recycle the selected at least one target anonymous page into the swap space.

In an embodiment, in the recycling at least one of the target anonymous pages corresponding to the target to-be-recycled process into the swap space, the page recycling module 150 is further configured to:
directly recycle all the target anonymous pages, currently stored in the memory space, of the target to-be-recycled process into the swap space.

The embodiment of the present disclosure also provides a readable storage medium that stores a computer program. When the computer program runs, the terminal device 10 at which the readable storage medium is located is controlled to perform the method for anonymous page management as described above. The readable storage medium may be any available medium that may be accessed by the terminal device 10 (for example, a personal computer, a server, etc.) or a data storage device such as a server or a data center integrated with one or more available medium. The available medium may be a magnetic medium (for example, a floppy disk, a hard disk, a magnetic tape), an optical medium (for example, a DVD), or a semiconductor medium (for example, a solid state hard disk (SSD)) and various medium that can store program codes.

In summary, in the method for anonymous page management, device, terminal device, and readable storage medium provided by the embodiments of the present disclosure, the method for anonymous page management may reduce the probability of random stalls in the to-be-executed process and ensures the execution efficiency of the to-be-executed process, when the to-be-executed process of which the anonymous page is stored in the swap space is being executed. The method includes: monitoring whether a process of which a priority changes exists in the terminal device; determining a target to-be-executed process according to a monitored priority change of each process; detecting whether a target anonymous page corresponding to the target to-be-executed process is stored in a swap space, wherein the swap space is configured to recycle anonymous pages; and prefetching the target anonymous page from the swap space in response to detecting that the target anonymous page is stored in the swap space, for directly using the target anonymous page when the target to-be-executed process is executed. In this way, the probability of random stalls in the to-be-executed process may be reduced, and the execution efficiency of the to-be-executed process may be ensured.

Any device for anonymous page management provided by the embodiments of the present disclosure may include: a processor and a memory; the memory stores an executable code; the processor is connected to the memory and is configured to execute the executable code in the memory to implement a method for anonymous page management provided in any embodiment of the present disclosure.

The executable code includes but is not limited to: source code and/or object code.

The foregoing descriptions are only preferred embodiments of the present disclosure and are not configured to limit the present disclosure. For those skilled in the art, the present disclosure may have various modifications and changes. Any modification, equivalent replacement, improvement, etc., made within the spirit and principle of the present disclosure should be included in the scope of the present disclosure.

## Claims

1. A method for anonymous page management, applied to a terminal device and comprising:
monitoring whether a process of which a priority changes exists in the terminal device;
determining a target to-be-executed process according to a monitored priority change of each process;
detecting whether a target anonymous page corresponding to the target to-be-executed process is stored in a swap space, wherein the swap space is configured to recycle anonymous pages; and
prefetching the target anonymous page from the swap space in response to detecting that the target anonymous page is stored in the swap space.

2. The method according to claim 1, wherein the determining the target to-be-executed process according to a monitored priority change of each process comprises:
filtering out all to-be-executed processes, each of which has a current priority becoming higher, according to the monitored priority change of each process;
for each to-be-executed process:
detecting whether a raised priority of a to-be-executed process is not lower than a first preset priority; and
determining the to-be-executed process as the target to-be-executed process in response to detecting that the raised priority of the to-be-executed process is not lower than the first preset priority.

3. The method according to claim 1 or 2, further comprising:
determining a target to-be-recycled process according to the monitored priority change of each process;
detecting whether target anonymous pages corresponding to the target to-be-recycled process are stored in a memory space; and
recycling at least one of the target anonymous pages corresponding to the target to-be-recycled process into the swap space in response to detecting that the target anonymous pages is stored in the memory space.

4. The method according to claim 3, wherein the determining the target to-be-recycled process according to the monitored priority change of each process comprises:
according to the monitored priority change of each process, filtering out all to-be-recycled processes, each of which has a current priority becoming lower and an anonymous page required to be recycled;
for each to-be-recycled process:
comparing a lowered priority of a to-be-recycled process with a second preset priority; wherein the second preset priority is less than or equal to the first preset priority;
determining the to-be-recycled process as the target to-be-recycled process in response to the lowered priority of the to-be-recycled process being lower than the second preset priority; and
comparing a not-yet-lowered priority of the to-be-recycled process with the first preset priority and comparing the lowered priority of the to-be-recycled process with the first preset priority, in response to the lowered priority of the to-be-recycled process being not lower than the second preset priority; and determining the to-be-recycled process as the target to-be-recycled process in response to the not-yet-lowered priority of the to-be-recycled process being not lower than the first preset priority and the lowered priority of the to-be-recycled process being lower than the first preset priority.

5. The method according to claim 4, wherein the recycling at least one of the target anonymous pages corresponding to the target to-be-recycled process into the swap space comprises:
detecting whether each target anonymous page, currently stored in the memory space, of the target to-be-recycled process is occupied by the target to-be-executed process, and obtaining a detection result; and
according to the detection result, selecting at least one of the target anonymous pages that is not occupied by the target to-be-executed process from all the target anonymous pages, currently stored in the memory space, of the target to-be-recycled process; and recycling the selected at least one of the target anonymous pages into the swap space.

6. The method according to claim 4, wherein the recycling at least one of the target anonymous pages corresponding to the target to-be-recycled process into the swap space comprises:
directly recycling all the target anonymous pages, currently stored in the memory space, of the target to-be-recycled process into the swap space.

7. A method for anonymous page management, applied to a terminal device and comprising:
monitoring whether a process of which a priority changes exists in the terminal device;
determining a target to-be-recycled process according to the monitored priority change of each process;
detecting whether target anonymous pages corresponding to the target to-be-recycled process are stored in the memory space; and
recycling at least one of the target anonymous pages corresponding to the target to-be-recycled process into the swap space in response to detecting that the target anonymous page is stored in the memory space; wherein the swap space is configured to recycle anonymous pages.

8. A device for anonymous page management, applied to a terminal device and comprising:
a process monitoring module, configured to monitor whether a process of which a priority changes exists in the terminal device;
a process determining module, configured to determine a target to-be-executed process according to a monitored priority change of each process;
a page detection module, configured to detect whether a target anonymous page corresponding to the target to-be-executed process is stored in a swap space; wherein the swap space is configured to recycle anonymous pages; and
a page prefetching module, configured to pre-read the target anonymous page from the swap space in response to detecting that the target anonymous page is stored in the memory space, for directly using the target anonymous page when the target to-be-executed process is executed.

9. The device according to claim 8, wherein the process determining module is further configured to:
filter out all to-be-executed processes, each of which has a current priority becoming higher, according to the monitored priority change of each process;
for each to-be-executed process:
detect whether a raised priority of a to-be-executed process is not lower than a first preset priority; and
determine the to-be-executed process as the target to-be-executed process in response to detecting that the raised priority of the to-be-executed process is not lower than the first preset priority.

10. The device according claim 8 or 9, further comprising a page recycling module;
wherein the process determining module is further configured to determine a target to-be-recycled process according to the monitored priority change of each process;
the page detection module is further configured to detect whether target anonymous pages corresponding to the target to-be-recycled process are stored in a memory space; and
the page recycling module is configured to recycle at least one of the target anonymous pages corresponding to the target to-be-recycled process into the swap space in response to detecting that the target anonymous pages is stored in the memory space.

11. The device according to claim 10, wherein the process determining module is further configured to:
according to the monitored priority change of each process, filter out all to-be-recycled processes, each of which has a current priority becoming lower and an anonymous page required to be recycled;
for each to-be-recycled process:
compare a lowered priority of a to-be-recycled process with a second preset priority; wherein the second preset priority is less than or equal to the first preset priority;
determine the to-be-recycled process as the target to-be-recycled process in response to the lowered priority of the to-be-recycled process being lower than the second preset priority; and
compare a not-yet-lowered priority of the to-be-recycled process with the first preset priority and compare the lowered priority of the to-be-recycled process with the first preset priority, in response to the lowered priority of the to-be-recycled process being not lower than the second preset priority; and determine the to-be-recycled process as the target to-be-recycled process in response to the not-yet-lowered priority of the to-be-recycled process being not lower than the first preset priority and the lowered priority of the to-be-recycled process being lower than the first preset priority.

12. The device according to claim 11, wherein the page recycling module is further configured to:
detect whether each target anonymous page, currently stored in the memory space, of the target to-be-recycled process is occupied by the target to-be-executed process, and obtain a detection result; and
according to the detection result, select at least one of the target anonymous pages that is not occupied by the target to-be-executed process from all the target anonymous pages, currently stored in the memory space, of the target to-be-recycled process, and recycle the selected at least one of the target anonymous pages into the swap space.

13. The device according to claim 11, wherein the page recycling module is further configured to:
directly recycle all the target anonymous pages, currently stored in the memory space, of the target to-be-recycled process into the swap space.

14. A device for anonymous page management, applied to a terminal device and comprising:
a process monitoring module, configured to monitor whether a process of which a priority changes exists in the terminal device;
a process determining module, configured to determine a target to-be-recycled process according to the monitored priority change of each process;
a page detection module, configured to detect whether target anonymous pages corresponding to the target to-be-recycled process are stored in a memory space; and
a page recycling module, configured to recycle at least one of the target anonymous pages corresponding to the target to-be-recycled process into a swap space in response to detecting that the target anonymous pages is stored in the memory space; wherein the swap space is configured to recycle anonymous pages.

15. A terminal device, comprising a processor and a non-volatile memory storing a computer instruction, wherein the terminal device performs a method for anonymous page management according to any one of claims 1-7 when the computer instruction is executed by the processor.

16. A readable storage medium, comprising a computer program, a terminal device at which the readable storage medium is located is controlled to perform a method for anonymous page management according to any one of claims 1-7 when the computer program is executed.
